# EUROPÄISCHE PATENTANMELDUNG

(11) **EP 1 174 306 A2**
(43) Veröffentlichungstag der Anmeldung: **23.01.2002**
(21) Anmeldenummer: 01117078.4
(22) Anmeldetag: 13.07.2001
(51) Int. Cl.: B60P 3/32, B60P 3/14

(54) **Geländigängiger Kastenwagen**

(30) Priorität: 20.07.2000 DE 20012565 U
(71) Anmelder: Diehl Stiftung & Co., 90478 Nürnberg (DE)
(72) Erfinder: Kamper, Jörg, 24860 Ulsby (DE); Meske, Hans-Peter, 91126 Schwabach (DE); Hägel, Roland, 90613 Grosshabersdorf (DE)
(74) Vertreter: Hofmann, Gerhard, Dipl.-Ing. Patentassessor

(57) **Zusammenfassung**

Durch die Erfindung liegt ein geländegängiger Kastenwagen als Gefechtsstand vor, in welchem zwei Personen sowohl während der Fahrt als auch im Stillstand tätig sein können.

## Beschreibung

Die Erfindung betrifft einen geländegängigen Kastenwagen, der als elektronische Geräte aufweisender Gefechtsstand benutzbar ist.

Bislang werden die elektronischen Geräte eines Gefechtsstandes und insbesondere der für die elektrischen und elektronischen Geräte des Gefechtsstandes erforderliche Stromerzeuger bzw. Generator mit einem Anhänger transportiert. Durch einen solchen Anhänger ist die Reisegeschwindigkeit entsprechend gering. Außerdem benötigen derartige Anhänger einen bestimmten Platzbedarf, was insbesondere bei der Luftverladung einen erheblichen Mangel darstellt. Anhänger haben außerdem auf die Gesamtanschaffungskosten Einfluß und bedingen einen nicht zu vernachlässigenden Wartungsaufwand. Auch die Geländergängigkeit eines mit einem solchen Anhänger kombinierten Zugfahrzeuges ist eingeschränkt.

Der Erfindung liegt deshalb die Aufgabe zugrunde, einen geländegängigen Kastenwagen zu schaffen, mit welchem die obigen Mängel beseitigt sind, wobei im Heckbereich des Kastenwagens zwei Personen verschiedene elektronische Geräte sowohl während der Fahrt des Kastenwagens als auch im Stillstand und bei der Benutzung des Kastenwagens als Gefechtsstand optimal bedienen können und wobei zwischen drei und mehr Kastenwagen im Nukleus ein kommunkativer Austausch möglich ist.

Diese Aufgabe wird erfindungsgemäß durch die Merkmale des Anspruches 1 gelöst. Bevorzugte Aus- bzw. Weiterbildungen des erfindungsgemäßen Kastenwagens sind in den Unteransprüchen gekennzeichnet.

Der erfindungsgemäße geländegängige Kastenwagen weist die folgenden Vorteile auf:
Es sind mindestens zwei Kastenwagen mit einem geeigneten Hubschrauber luftverlastbar;
durch die Integration einer überdimensionierten Klimaanlage und einer leistungsfähigeren Lichtmaschine bzw. eines leistungsfähigeren Generators in dem Kastenwagen ist ein separater Generator bzw. Stromerzeuger sowie ein dafür bislang benötigter Anhänger entbehrlich;
durch den Wegfall des Anhängers sind höhere Reisegeschwindigkeiten möglich;
im Betrieb des Kastenwagens bei Leerlaufdrehzahl, d.h. im Nukleus eines Gefechtsstandes, ist die Geräuschemission geringer als die Geräuschemission eines separaten Stromerzeugers;
die gesamte Ausrüstung für den Nukleus eines Gefechtsstandes ist in die Kastenwagen integriert, d.h. durch den Wegfall der Anhänger ist der Platzbedarf für den Nukleus eines Gefechtsstandes geringer, wobei auch die Silhouette des Gefechtsstandes niedrig ist;
durch den Wegfall der Anhänger sind die Gesamtanschaffungskosten niedriger und der Wartungsaufwand geringer;
der Aufbau des Nukleus eines Gefechtsstandes ist in kürzester Zeit möglich, weil alle Komponenten, wie die elektronischen Geräte, sich im jeweiligen Kastenwagen befinden;
durch die Aufstellung von mindestens drei Kastenwagen nach Art einer Wagenburg und durch die Ausbildung der Kastenwagen mit aufklappbarer Seitenwand ergibt sich durch eine komplette Zeltabdeckung des Gefechtsstandes in ihm ein ausgezeichneter Komfort mit idealer Kommunikationsmöglichkeit zwischen den Kastenwagen;
die äußeren Abmessungen des Kastenwagens unterscheiden sich nicht von den entsprechenden, zivil benutzten Kastenwagen;
infolge des relativ niedrigen Gewichtes und infolge fehlenden Anhängerbetriebs ergibt sich eine vergrößerte Tankreichweite;
die Kommunikation im Gefechtsstand ist in einer relativ geschützten Umgebung möglich, die quasi einen Arbeitsraum darstellt;
infolge der Integration der gesamten Ausrüstung in das Fahrzeug, d.h. durch den Wegfall eines Anhängers, ergibt sich eine extrem gute Geländefähigkeit des Fahrzeuges;
im Heckbereich des Kastenwagens ergibt sich durch den drehbaren Beifahrersitz eine optimale Platzausnutzung;
Kartenlesen, Funken, Arbeiten am PC sowie andere notwendige Arbeiten sind auch während der Fahrt - insbesondere durch den Beifahrer - möglich.

Weitere Einzelheiten, Merkmale und Vorteile ergeben sich aus der nachfolgenden Beschreibung eines in der Zeichnung schematisch verdeutlichten Ausführungsbeispieles des erfindungsgemäßen geländegängigen Kastenwagens sowie eines von vier solchen Kastenwagen gebildeten Gefechtsstandes. Es zeigen:
- Figur 1: in einer perspektivischen Ansicht eine Ausbildung des geländegängigen Kastenwagens,
- Figur 2: den Kastenwagen gemäß Figur 1 dachseitig aufgeschnitten und mit aufgeklappter Seitenwand,

- Figur 3: perspektivisch einen Gefechtsstand mit vier nach Art einer Wagenburg aufgestellten Kastenwagen gemäß den Figuren 1 oder 2, und
- Figur 4: den mit Zeltplanen überdeckten Gefechtsstand gemäß Figur 3.

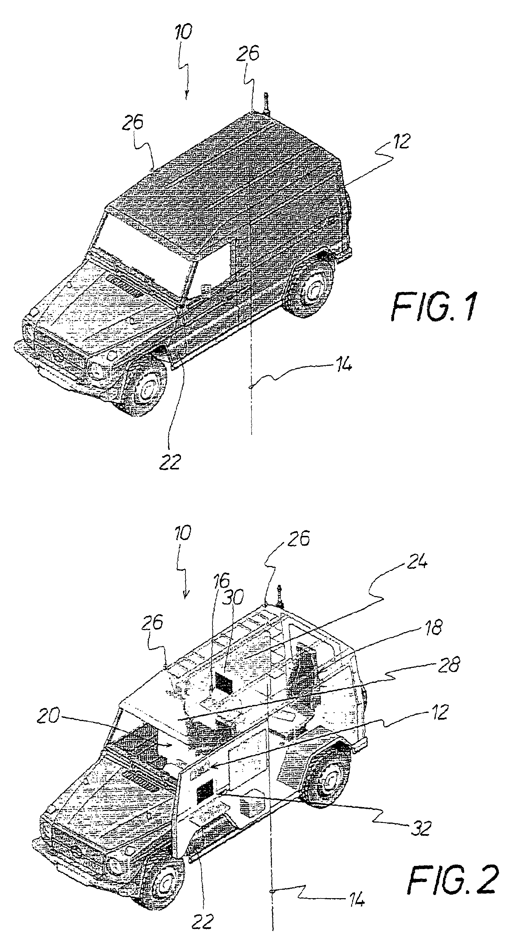

Figur 1 zeigt einen geländegängigen Kastenwagen 10, der sich von einem zivil genutzten Kastenwagen des entsprechenden Bautyps dadurch unterscheidet, daß er eine Seitenwand 12 aufweist, die um eine Vertikalachse 14 zwischen einer in Figur 1 gezeichneten geschlossenen Stellung und einer in Figur 2 gezeichneten geöffneten Stellung hin- und herverschwenkbar, d.h. klappbar ist.

Im Kastenwagen 10 sind zwei mit elektronischem Gerät ausgestattete, seitlich und in Fahrzeug-Längsrichtung gegeneinander versetzte, einander zugewandte Arbeitsplätze 16 und 18 vorgesehen. Dem einen Arbeitsplatz 16 ist der Beifahrersitz 20 zugeordnet, der zwischen einer in Fahrtrichtung orientierten Position und einer in Figur 2 gezeichneten, gegen die Fahrtrichtung orientierten Position drehbar ist. Der zweite Arbeitsplatz 18 ist hinter dem Fahrersitz vorgesehen und in Fahrtrichtung des Kastenwagens 10 orientiert.

Aufklappbar ist die fahrerseitige Seitenwand 12. In der aufgeklappten Arbeitsstellung ist die Seitenwand 12 arretierbar. Zu diesem Zwecke ist beispielsweise der Radkasten 22 des fahrerseitigen Vorderrades mit einer geeigneten Arretiereinrichtung versehen.

Im Kastenwagen 10 ist ein Lagerabteil 24 vorgesehen, das zur Lagerung einer Zeitplane, eines Zeltmastes eines Abgasschlauches und zur Lagerung von Spannseilen vorgesehen ist. Das Lagerabteil 24 ist durch eine nicht gezeichnete Klappe von außen zugänglich. Vorteilhaft erfolgt beim Be- und Entladen keine Beeinträchtigung und Verschmutzung des Innenraumes bzw. der dort angeordneten hochwertigen Geräte.

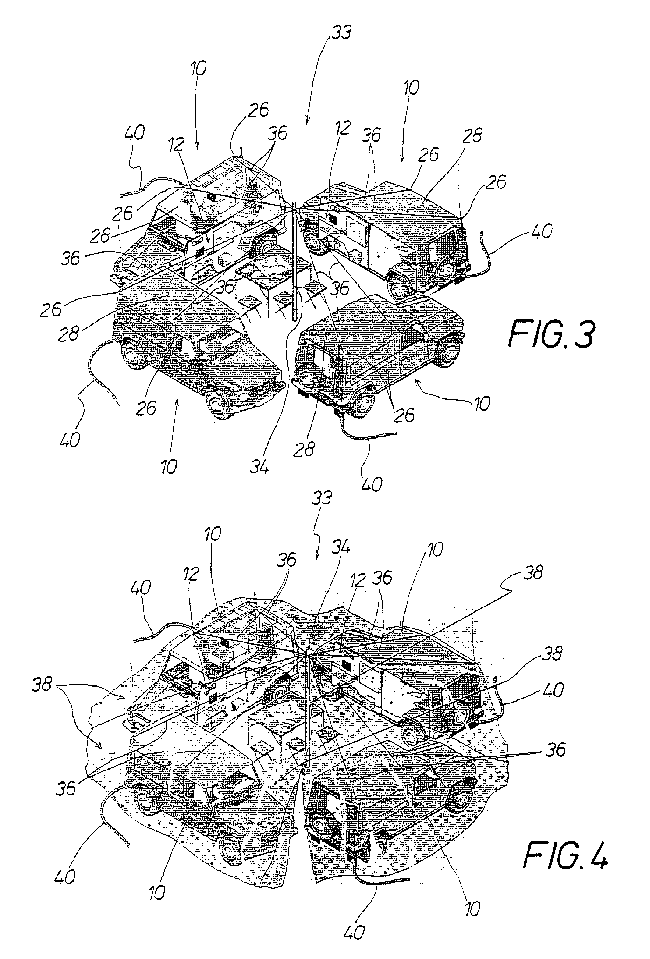

Zum Befestigen der Spannseile, die weiter unten in Verbindung mit den Figuren 3 und 4 beschrieben werden, ist der Kastenwagen 10 mit Befestigungsorganen 26 ausgebildet, die beispielsweise auf dem Dach 28 des Kastenwagens 10 an der Längskante zwischen dem Dach 28 und der der aufklappbaren Seitenwand 10 gegenüberliegenden Seitenwand des Kastenwagens 10 vorgesehen sind.

Jeder der beiden Arbeitsplätze 16, 18 ist z.B. mit einem PC 30, 32 ausgestattet. Der dem zweiten Arbeitsplatz 18 zugeordnete PC 32 ist an der Innenseite der aufklappbaren Seitenwand 12 angeordnet, so daß er bei der Aufstellung einer Anzahl Kastenwagen 10 nach Art einer Wagenburg im Gefechtsstand (wie er in den Figuren 3 und 4 dargestellt ist) zur Verfügung steht.

Die Figur 3 zeigt die Anordnung von vier Kastenwagen 10 nach Art einer Wagenburg zu einem entsprechenden Gefechtsstand, wobei die Kastenwagen 10 derartig aufgestellt werden, daß die aufklappbaren Seitenwände 12 der Kastenwagen 10 in das Innere des Gefechtsstandes 34 weisen. In Figur 3 sind die aufklappbaren Seitenwände 12 im aufgeklappten Zustand gezeichnet. Nach der Aufstellung der Kastenwagen 10 wird mittig zwischen diesen ein Mast 34 aufgestellt. Der Mast 34 wird mit Hilfe von Spannseilen 36 verspannt. Die Spannseile 36 verlaufen zwischen dem Mast 34 und den weitern oben erwähnten Befestigungsorganen 26. Anschließend wird der Gefechtsstand 33 mit Zeltplanen 38 überdeckt, wobei jeder Kastenwagen 10 seinen Anteil an den Spannseilen, den Zeltplanen und dem Mast mitführt.lnnerhalb der Kastenwagen 10 ergibt sich beispielsweise eine Arbeitsfläche von ca. 20 qm, die optimal klimatisiert werden kann, so daß sich ausgezeichnete Arbeitsbedingungen ergeben.

Jeder Kastenwagen 10 weist eine Abgas-Schlauchleitung 40 auf. Die Abgas-Schlauchleitungen 40 ragen aus den Zeltplanen 30 vor, um die Atmosphäre im Gefechtsstand 33 nicht zu beeinträchtigen.

### Bezugsziffernliste:

- 10: Geländegängiger Kastenwagen
- 12: Seitenwand (von 10)
- 14: Vertikalachse (von 12)
- 16: Arbeitsplatz (in 10)
- 18: Arbeitsplatz (in 10)
- 20: Beifahrersitz (von 10)
- 22: Radkasten (von 10)
- 24: Lagerabteil (in 10)
- 26: Befestigungsorgane (an 28)
- 28: Dach (von 10)
- 30: PC (an 16)
- 32: PC (an 12)
- 33: Gefechtsstand
- 34: Mast (von 33)
- 36: Spannseile (zwischen 34 und 28)
- 38: Zeltplanen (für 33)
- 40: Abgas-Schlauchleitung (für 10)

## Patentansprüche

1. Geländegängiger Kastenwagen,
**dadurch gekennzeichnet,**
**daß** im Kastenwagen (10) zwei mit elektronischem Gerät ausgestattete, seitlich und in Fahrzeug-Längsrichtung gegeneinander versetzte, einander zugewandte Arbeitsplätze (16, 18) vorgesehen sind, und daß eine Seitenwand (12) des Kastenwagens (10) mit elektronischem Gerät ausgerüstet und um eine Vertikalachse (14) aufklappbar ist.

2. Geländegängiger Kastenwagen nach Anspruch 1,
**dadurch gekennzeichnet,**
**daß** die Seitenwand (12) in der aufgeklappten Arbeitsstellung arretierbar ist.

3. Geländegängiger Kastenwagen nach Anspruch 1,
**dadurch gekennzeichnet,**
**daß** die fahrerseitige Seitenwand (12) aufklappbar ist.

4. Geländegängiger Kastenwagen nach einem der Ansprüche 1 bis 3,
**dadurch gekennzeichnet,**
**daß** der dem einen Arbeitsplatz (16) zugeordnete Beifahrersitz (20) zwischen einer in Fahrtrichtung orientierten Position und einer gegen die Fahrtrichtung orientierten Position drehbar ist.

5. Geländegängiger Kastenwagen nach einem der Ansprüche 1 bis 4,
**dadurch gekennzeichnet,**
**daß** der zweite Arbeitsplatz (18) hinter den Fahrersitz vorgesehen ist.

6. Geländegängiger Kastenwagen nach einem der Ansprüche 1 bis 5,
**dadurch gekennzeichnet,**
**daß** im Kastenwagen (10) ein Lagerabteil (24) für eine Zeltplane (38), einen Zeltmast (34) und Spannseile (36) vorgesehen und von außen durch Klappe oder ähnliches zugänglich ist.

7. Geländegängiger Kastenwagen nach Anspruch 5,
**dadurch gekennzeichnet,**
**daß** der Kastenwagen (10) mit Befestigungsorganen (26) für die Spannseile (36) versehen ist.

8. Geländegängiger Kastenwagen nach einem der Ansprüche 1 bis 7,
**dadurch gekennzeichnet,**
**daß** der Kastenwagen (10) eine überdimensionierte Klimaanlage aufweist.

9. Geländegängiger Kastenwagen nach einem der Ansprüche 1 bis 8,
**dadurch gekennzeichnet,**
**daß** der Kastenwagen (10) einen auch zur Stromversorgung der elektronischen Geräte vorgesehenen Generator (Lichtmaschine) aufweist.
